# EUROPEAN PATENT APPLICATION

(11) **EP 3 107 140 A1**
(43) Date of publication of application: **21.12.2016**
(21) Application number: 15749051.7
(22) Date of filing: 09.02.2015
(51) Int. Cl.: H01M 8/04, F02G 1/043

(54) **POWER GENERATION SYSTEM AND POWER GENERATION SYSTEM OPERATION METHOD**

(30) Priority: 14.02.2014 JP 2014026140
(71) Applicant: Panasonic Intellectual Property Management Co., Ltd., Osaka-shi, Osaka 570-6207 (JP)
(72) Inventor: SHIOSAKI, Keisuke, Osaka 540-6207 (JP); URATA, Takayuki, Osaka 540-6207 (JP); TATSUI, Hiroshi, Osaka 540-6207 (JP)
(74) Representative: Grünecker Patent- und Rechtsanwälte PartG mbB
(86) International application number: PCT/JP2015/000585
(87) International publication number: WO 2015/122172

(57) **Abstract**

A power generating system (14) includes power generator (2), housing (3) that houses power generator (2), air supply unit (4) that supplies outside air into housing (3), intake air temperature detector (5) that detects the temperature of intake air, fuel channel (7) that allows fuel to flow, a seal member for preventing fuel from leaking from fuel channel (7), heating unit (9) that performs heating the seal member, and control device (10) that operates heating unit (9). Control device (10) controls the operation of heating unit (9) based on the operation of air supply unit (4) and a temperature detected by intake air temperature detector (5) so as to reduce the hardening of the seal member. Consequently, it is possible to provide power generating system (14) that can reduce a decrease in temperature of the seal member so as to secure the sealability of fuel channel (7), thus achieving stable power generation.

## Description

### TECHNICAL FIELD

The present invention relates to a power generating system for supplying electric power to a system or a load, and an operating method for the power generating system.

### BACKGROUND ART

A power generating system is adapted to compensate for an electric power load of a consumer by generated electric power, and further, to supply electric power to the system in the case where excessive electric power is generated.

There has been conventionally known a power generating system disposed in a building (see, for example, PTL 1).

A power generating system disclosed in PTL 1 includes a fuel cell, an exhaust pipe for discharging exhaust gas generated in a fuel cell system, and a duct of a dual pipeline structure having an inside channel and an outside channel.

Moreover, there has been known a high pressure gas tank system having a configuration that aims to secure sealability (see, for example, PTL 2).

The high pressure gas tank system disclosed in PTL 2 includes a heat generator for a heater, disposed along a seal member for a fuel channel and a temperature sensor for detecting a temperature in the vicinity of the seal member.

However, in the power generating system for taking intake air from the outside of a building, disclosed in PTL 1, in the case where an outside temperature is low, the outside air having a low temperature decreases a temperature at a fuel channel in a housing. In this case, the decrease in the temperature may harden a seal member. When the seal member is hardened, the compression set of the seal member reduces the repulsion of the seal member. As a consequence, the sealability of the fuel channel is degraded, and therefore, sufficient sealability cannot be secured. Thus, there is a possibility that fuel may leak from the fuel channel. As a result, the fuel cannot be satisfactorily supplied to a power generator, thereby inducing a problem of unstable power generation.

Furthermore, the high pressure gas tank system disclosed in PTL 2 has the configuration in which the temperature in the vicinity of the seal member inside a gas tank is detected. However, in the case where an ambient temperature abruptly changes, the temperature of metal around the seal member is decreased, and then, the seal member is heated. Therefore, the seal member is insufficiently heated, and furthermore, the metal around the seal member gains the heat, thereby decreasing the temperature of the seal member. In other words, it is impossible to sufficiently reduce hardening of the seal member. As a result, a problem of insufficient sealability of the fuel channel has arisen.

### Citation List

### Patent Literatures

PTL 1: Unexamined Japanese Patent Publication No. 2008-210631
PTL 2: Unexamined Japanese Patent Publication No. 2011-38559

### SUMMARY OF THE INVENTION

The present invention provides a power generating system that sufficiently secures the sealability of a fuel channel so as to achieve stable power generation, and an operating method for the power generating system.

Specifically, a power generating system according to the present invention includes: a power generator that generates power using fuel; a housing that houses the power generator; an intake air channel that supplies outside air into the housing; an exhaust gas channel that discharges exhaust gas from the power generator to an outside; and an air supply unit that supplies the outside air from the intake air channel to the housing. Furthermore, the power generating system includes: an intake air temperature detector that detects a temperature of the outside air supplied into the housing or intake air into the housing; a fuel channel that is disposed in the housing and allows the fuel to flow; a seal member for preventing fuel from leaking from the fuel channel; a heating unit that performs heating to a temperature equal to or higher than the temperature at which hardening of the seal member is reduced; and a control device that operates the heating unit. The control device controls the operation of the heating unit based on the operation of the air supply unit and a temperature detected by the intake air temperature detector so as to reduce the hardening of the seal member.

With this configuration, the heating unit is controlled based on the operation of the air supply unit and the temperature of air detected by the intake air temperature detector. Thus, hardening of the seal member is reduced, and thus, the sealability of the fuel channel is sufficiently secured. As a consequence, it is possible to achieve the power generating system that can sufficiently supply the fuel to the power generator so as to stably generate power.

### BRIEF DESCRIPTION OF DRAWINGS

FIG. 1 is a schematic view showing the general configuration of a power generating system in a first exemplary embodiment according to the present invention.
FIG. 2 is a cross-sectional view showing essential parts disposed in the vicinity of a seal member at a portion X indicated by a dotted circle in FIG. 1.
FIG. 3 is a flowchart illustrating an operation in a first example of the power generating system in the exemplary embodiment.
FIG. 4 is a flowchart illustrating an operation in a second example of the power generating system in the exemplary embodiment.
FIG. 5 is a flowchart illustrating an operation in a third example of the power generating system in the exemplary embodiment.
FIG. 6 is a schematic view showing the general configuration of a power generating system in a second exemplary embodiment according to the present invention.

### DESCRIPTION OF EMBODIMENTS

Exemplary embodiments according to the present invention will be described below with reference to the attached drawings. Incidentally, the present exemplary embodiments do not restrict the present invention.

### FIRST EXEMPLARY EMBODIMENT

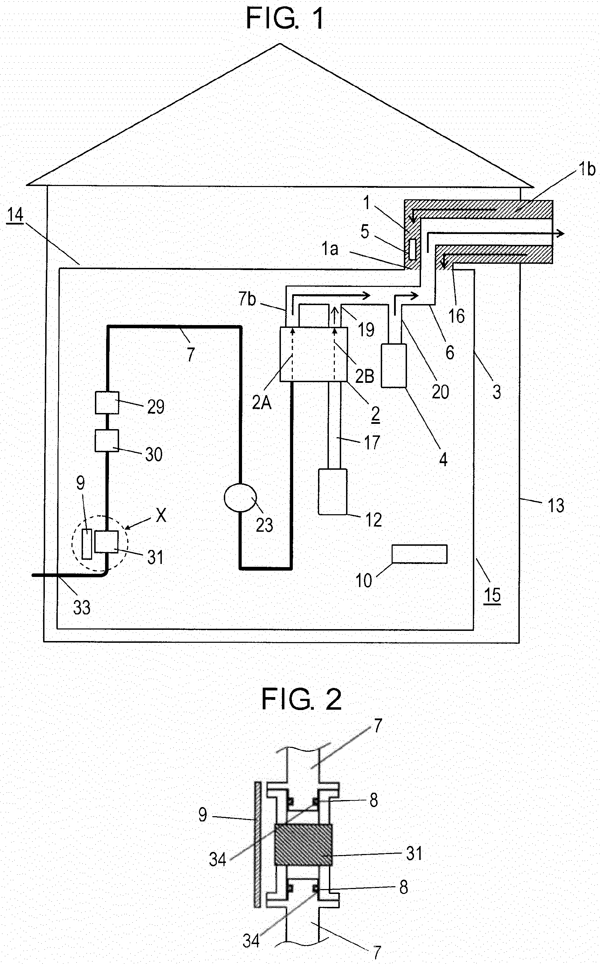

A power generating system in a first exemplary embodiment according to the present invention will be described below with reference to FIG. 1.

FIG. 1 is a schematic view showing the configuration of a power generating system in the first exemplary embodiment according to the present invention.

As shown in FIG. 1, power generating system 14 in the present exemplary embodiment includes at least power generating unit 15, control device 10, intake air channel 1, exhaust gas channel 6, and the like. Power generating system 14 is housed in building 13.

Power generating unit 15 in power generating system 14 is provided with housing 3. Inside of housing 3 are housed at least power generator 2, air supply unit 4, oxidizing agent gas supply unit 12, fuel supply unit 23, fuel flowmeter 29, pressure gauge 30, first fuel source valve 31, control device 10, and the like. Here, although the present exemplary embodiment exemplifies the configuration in which control device 10 is housed in housing 3, the present invention is not limited to this. For example, control device 10 may be installed outside housing 3.

Moreover, through hole 16 penetrating in a wall thickness direction is formed at a proper portion of a wall constituting housing 3. Into through hole 16 is inserted a dual pipeline including a pipeline constituting exhaust gas channel 6 and a pipeline constituting intake air channel 1. Specifically, the pipeline constituting exhaust gas channel 6 is disposed inside the pipeline constituting intake air channel 1, thereby achieving the dual pipeline.

The upstream end of exhaust gas channel 6 is connected to housing 3. Consequently, the system is configured such that exhaust gas discharged from power generating unit 15 flows through exhaust gas channel 6. In addition, exhaust gas channel 6 is disposed such that exhaust gas channel 6 penetrates through hole 16 to extend up to the outside of building 13. The downstream end (i.e., an opening) of exhaust gas channel 6 is released to the atmosphere.

In contrast, the downstream end of intake air channel 1 is connected to housing 3 whereas the upstream end (i.e., an opening) thereof is released to the atmosphere. As a consequence, air can be supplied to power generating unit 15 from the outside (outside of building 13 in the present exemplary embodiment) through intake air channel 1.

Power generator 2 in power generating unit 15 is configured such that fuel and oxidizing agent gas react with each other so as to produce electricity and heat. The electricity produced at power generator 2 is supplied to the system, an outside electric power load (such as domestic electric equipment), or the like by an electric power adjusting unit, not shown. The heat produced at power generator 2 is recovered by a thermal medium flowing on a thermal medium channel, not shown. The heat recovered by the thermal medium is utilized for heating, for example, water or a seal member. Here, power generator 2 includes a fuel cell, a gas engine, a Stirling engine, or the like in the present exemplary embodiment.

Air supply unit 4 in power generating unit 15 is connected to exhaust gas channel 6 via air channel 20. Here, air supply unit 4 is only required to supply air into housing 3. Air supply unit 4 includes a fan or a blower, for example. When air supply unit 4 is operated, air outside of power generating system 14 is taken into housing 3 through intake air channel 1. Moreover, gas (mainly air) taken into housing 3 is discharged to the outside of building 13 through air channel 20 and exhaust gas channel 6. In this manner, the inside of housing 3 is ventilated. Incidentally, although the present exemplary embodiment exemplifies the configuration in which air supply unit 4 is housed in housing 3, the present invention is not limited to this. For example, air supply unit 4 may be disposed in exhaust gas channel 6.

Oxidizing agent gas supply unit 12 in power generating unit 15 supplies oxidizing agent gas (i.e., air) to power generator 2 while adjusting its flow rate. Here, oxidizing agent gas supply unit 12 may have any configurations. Oxidizing agent gas supply unit 12 includes a fan or a blower, for example. Oxidizing agent gas supply unit 12 is connected to power generator 2 through oxidizing agent gas supply channel 17.

Next, a description will be given below of a configuration of fuel channel 7 extending from fuel intake port 33, through which fuel is taken into power generating unit 15, to power generator 2.

First, the fuel to be supplied to building 13 is supplied to fuel intake port 33 formed at fuel channel 7 in power generating unit 15. On fuel channel 7 are disposed first fuel source valve 31, pressure gauge 30, fuel flowmeter 29, and fuel supply unit 23 in order from fuel intake port 33 in a fuel flow direction.

An outlet of fuel channel 7 is connected to an upstream end of off fuel channel 7b. A downstream end of off fuel channel 7b is connected to exhaust gas channel 6. Moreover, an outlet of oxidizing agent gas channel 2B is connected to an upstream end of off oxidizing agent gas channel 19. A downstream end of off oxidizing agent gas channel 19 is connected to exhaust gas channel 6.

In this manner, fuel that is not used in power generator 2 (hereinafter referred to as "off fuel") is discharged from the outlet of fuel channel 7 to exhaust gas channel 6 through fuel gas channel 2A and off fuel channel 7b. In addition, oxidizing agent gas that is not used in power generator 2 (hereinafter referred to as "off oxidizing agent gas") is discharged from the outlet of oxidizing agent gas channel 2B to exhaust gas channel 6 through off oxidizing agent gas channel 19. The off fuel discharged to exhaust gas channel 6 is diluted with the off oxidizing agent gas, and then, is discharged to the outside of building 13 through exhaust gas channel 6.

In the present exemplary embodiment, the off fuel, the off oxidizing agent gas, and gas (i.e., air) staying in housing 3 when air supply unit 4 is operated are illustrated as exhaust gas to be discharged from power generating unit 15. In the same manner, the oxidizing agent gas and gas (i.e., air) to be supplied to housing 3 when air supply unit 4 is operated are illustrated as outside air to be supplied to power generating unit 15.

Fuel channel 7 in power generating unit 15 in the present exemplary embodiment is such configured as described above.

Moreover, as shown in FIG. 1, control device 10 in power generating unit 15 includes an arithmetic processor typified by a microprocessor, a CPU (abbreviating a Central Processing Unit), or the like and a storage that stores therein a program for executing each of control operations and includes a memory or the like. The arithmetic processor in control device 10 reads out a predetermined control program stored in the storage, and then, executes the program. In this manner, control device 10 processes information on the read-out control program, and furthermore, performs various kinds of control relevant to power generating system 14 inclusive of control.

Here, control device 10 is not limited to the above-described configuration, and therefore, control device 10 may take any modes as long as control device 10 controls each equipment constituting power generating system 14. Moreover, control device 10 may take the mode of a single control device or a mode of a group of control devices for controlling power generating system 14 in cooperation. Additionally, control device 10 may be a microcomputer, an MPU (Micro Processing Unit), a PLC (Programmable Logic Controller), a logic circuit, and the like.

Furthermore, power generating system 14 in the present exemplary embodiment is provided with intake air temperature detector 5 for detecting the temperature of intake air to be supplied to housing 3 in power generating unit 15. Intake air temperature detector 5 is disposed on, for example, the way from intake air upstream end 1b to intake air downstream end 1a on intake air channel 1. The arrangement of intake air temperature detector 5 is not limited to the above-described position. For example, only a sensor part of intake air temperature detector 5 may be exposed in intake air channel 1 whereas the other part of intake air temperature detector 5 may be disposed outside intake air channel 1. Furthermore, intake air temperature detector 5 may be disposed, for example, outside housing 3. In this case, it is preferable that intake air temperature detector 5 be disposed at a position at which the temperature of outside air to be supplied into housing 3 can be detected.

In addition, power generating system 14 in the present exemplary embodiment includes, at a junction between fuel channel 7 and first fuel source valve 31, seal member 8 for preventing the fuel from leaking from fuel channel 7.

Hereinafter, explanation will be made on a configuration in the vicinity of seal member 8 in power generating system 14 in the present exemplary embodiment with reference to FIG. 2.

FIG. 2 is a cross-sectional view showing essential parts disposed in the vicinity of the seal member at a portion X indicated by a dotted circle in FIG. 1.

As shown in FIG. 2, annular recess 34 is formed at the junction between fuel channel 7 and first fuel source valve 31. In annular recess 34 is disposed seal member 8 such as an O-ring, thus air-tightly joining fuel channel 7 and first fuel source valve 31 to each other.

Moreover, heating unit 9 including a heating device for heating fuel channel 7 is disposed in the vicinity of the junction between fuel channel 7 and first fuel source valve 31. Heating unit 9 heats fuel channel 7, thus reducing hardening of seal member 8 disposed on fuel channel 7, caused by a decrease in temperature.

Here, heating unit 9 is only required to have a function of reducing hardening of seal member 8. For example, heating unit 9 may be a heater or have a configuration using heat recovered by the above-described thermal medium, not shown. Moreover, heating unit 9 may be disposed at any positions at which hardening of seal member 8 can be reduced. For example, heating unit 9 may be disposed at an upper, lower, or side portion of seal member 8 in contact or in separation. Additionally, a plurality of heating units 9 may be disposed.

Power generating system 14 in the present exemplary embodiment is such configured as described above.

An operating method and operation of power generating system 14 in the present exemplary embodiment will be described below with using examples.

In other words, in power generating system 14 in the present exemplary embodiment, when the temperature of intake air is low (i.e., in the case where it is a predetermined first temperature or lower), heating unit 9 heats fuel channel 7 in the vicinity of seal member 8, thus securing the sealability of fuel channel 7. Consequently, the fuel is sufficiently supplied to power generator 2, thereby achieving stable power generation.

Here, the first temperature has been acquired in advance by, for example, an experiment as a temperature at which the air taken into housing 3 decreases the temperature of seal member 8 so as to cause the leakage of combustible gas. The acquired first temperature has been stored in advance in the storage in control device 10 as an upper limit temperature at which the combustible gas as the fuel leaks from fuel channel 7.

Alternatively, the first temperature may be a proper predetermined value, described below, without an experiment, based on low temperature limitation performance in conformity with the JIS (JIS B 2401-1 to 2401-4 (ISO 3601-1 to 2601-4) relating to the O-ring constituting seal member 8. For example, in the case where seal member 8 is made of the first type A rubber, the first temperature has a low temperature limitation performance of -24°C; the first type B rubber, -23°C; the second type rubber, -22°C; the third type rubber, -51°C; the fourth type C rubber, -48°C; the fourth type D rubber, -15°C; the fourth type E rubber, -18°C; and the fifth type rubber, -49°C. In view of the above, in the present exemplary embodiment, a proper tolerance (e.g., 5°C or 10°C) is added to a temperature exhibited by the low temperature limitation performance of seal member 8 that is used, thereby obtaining the first temperature. Heating unit 9 is controlled based on the set first temperature, thus operating power generating system 14.

A description will be specifically given below of the operating method and operation of power generating system 14 in the present exemplary embodiment, in particular, of a heating operation in the vicinity of seal member 8, by way of first to third examples.

### (First Example)

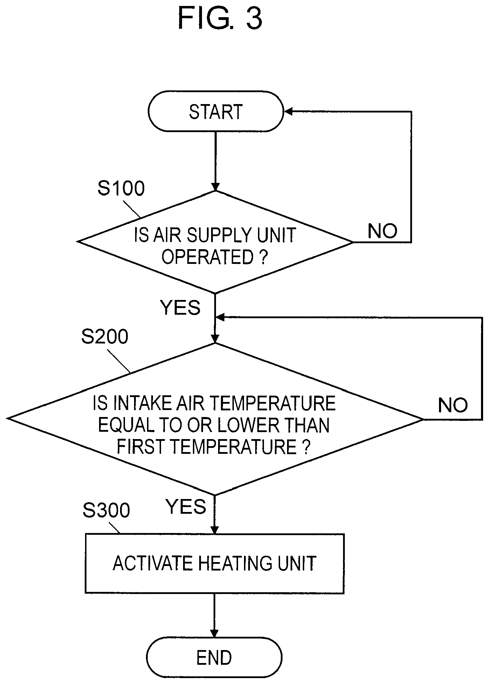

First, explanation will be made on the operating method and operation of power generating system 14 in the present exemplary embodiment by way of a first example with reference to FIG. 3.

FIG. 3 is a flowchart illustrating an operation in the first example of the power generating system in the exemplary embodiment.

As shown in FIG. 3, control device 10 first determines whether or not an operational command for air supply unit 4 is input into power generating unit 15 (step S100).

If control device 10 determines that no operational command for air supply unit 4 is input (NO in step S100), the processing in step S100 is repeated until an operational command for air supply unit 4 is input. In contrast, if control device 10 determines that an operational command for air supply unit 4 is input (YES in step S100), control device 10 acquires the measurement value of the temperature of air taken into housing 3, detected by intake air temperature detector 5.

Next, control device 10 determines whether or not the acquired intake air temperature is equal to or lower than the predetermined first temperature set in the above-described manner (step S200). If control device 10 determines that the intake air temperature is equal to or lower than the first temperature (YES in step S200), control device 10 activates heating unit 9 (step S300) so as to heat fuel channel 7 in the vicinity of seal member 8. In contrast, if control device 10 determines that the intake air temperature is higher than the predetermined first temperature (NO in step S200), control device 10 does not activate heating unit 9 and repeats the determination of the intake air temperature and the first temperature (step S200).

By performing the above-described processing, in the case where the temperature of the outside air taken into housing 3 as the intake air is lower than the first temperature, heating unit 9 heats fuel channel 7 in the vicinity of seal member 8. In this manner, it is possible to securely reduce a decrease in temperature of seal member 8 caused by the intake air so as to sufficiently secure the sealability of fuel channel 7, thus achieving power generating system 14 that can supply the fuel to power generator 2 in a sufficient quantity so as to stably generate power.

### (Second Example)

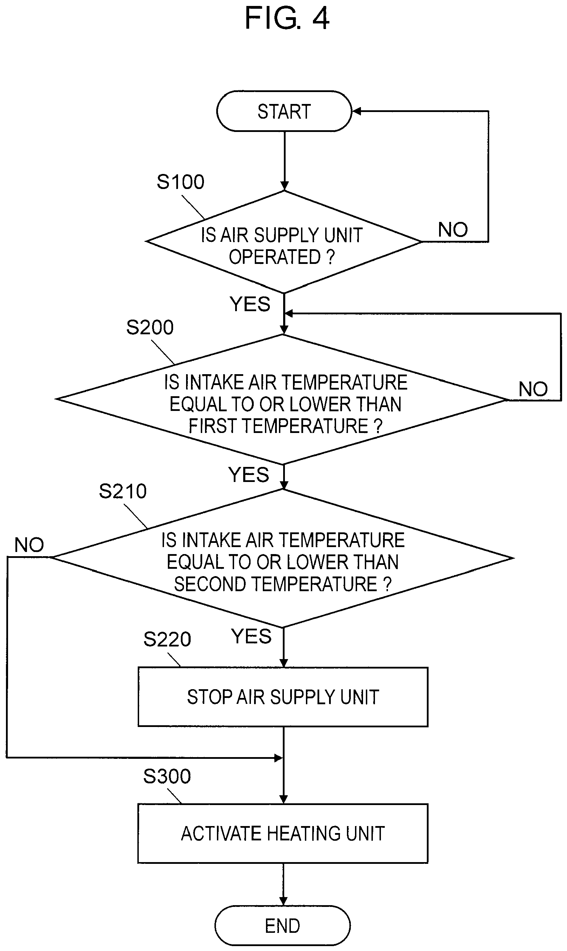

Subsequently, explanation will be made on the operating method and operation of power generating system 14 in the present exemplary embodiment by way of a second example with reference to FIG. 4.

FIG. 4 is a flowchart illustrating an operation in the second example of the power generating system in the exemplary embodiment.

Also in the second example, the processing in step S100, step S200, and step S300 as that in the first example is performed in the same manner. However, the second example is different from the first example in that processing in each of steps S210, S220 is performed between step S200 and step S300 in the first example.

Explanation will be specifically made below on the operation.

First, in the same manner as in the first example, control device 10 determines whether or not air supply unit 4 is operated (step S100), and furthermore, determines whether or not the temperature of the intake air is equal to or lower than the first temperature (step S200).

At this time, in the case where air supply unit 4 is operated (YES in step S100) and the temperature of the intake air is equal to or lower than the first temperature (YES in step S200), control device 10 further determines whether or not the temperature of the intake air is equal to or lower than a second temperature (step S210) in the second example. Here, the second temperature is a temperature that is lower than the first temperature and has been stored in advance in the storage or the like in control device 10. Specifically, the second temperature is, for example, about -15°C. If the air is kept to be taken in the case where the temperature of the intake air is too low, heating unit 9 cannot follow, thereby raising a drawback of a decrease in temperature of seal member 8. In view of this, the second temperature that is lower than the first temperature is set, and then, in the case where the temperature of the intake air is equal to or lower than the second temperature, the air intake is stopped and heating unit 9 is first operated. In this manner, it is possible to more securely reduce a decrease in temperature of seal member 8.

In the case where control device 10 determines that the temperature of the intake air is equal to or lower than the second temperature (YES in step S210), control device 10 stops the operation of air supply unit 4 whose operation is confirmed in step S100 (step S220). Then, control device 10 activates heating unit 9 in the same manner as in the first example (step S300). In contrast, in the case where control device 10 determines that the temperature of the intake air is higher than the second temperature (NO in step S210), control device 10 does not stop the operation of air supply unit 4 and activates heating unit 9 (step S300).

By performing the above-described processing, in the case where the temperature of the intake air is lower than the second temperature that is lower than first temperature, air supply unit 4 is stopped, and then, heating unit 9 heats fuel channel 7 in the vicinity of seal member 8. In this manner, it is possible to securely reduce a decrease in temperature of seal member 8 caused by the intake air so as to sufficiently secure the sealability of fuel channel 7, thus achieving power generating system 14 that can supply the fuel to power generator 2 in a sufficient quantity so as to stably generate power.

### (Third Example)

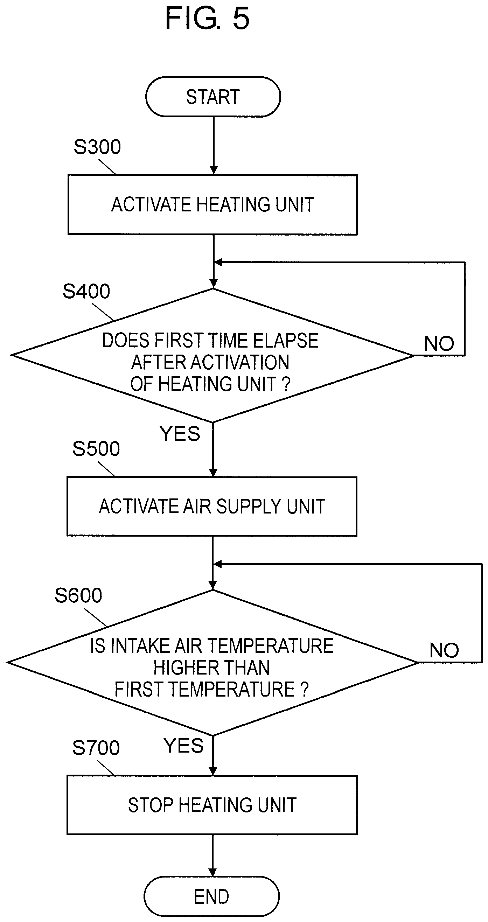

Subsequently, explanation will be made on the operating method and operation of power generating system 14 in the present exemplary embodiment by way of a third example with reference to FIG. 5.

FIG. 5 is a flowchart illustrating an operation in the third example of the power generating system in the exemplary embodiment.

As shown in FIG. 5, control device 10 first activates heating unit 9 (step S300).

Next, control device 10 measures a lapse time after the activation of heating unit 9, and then, determines whether or not a predetermined first time elapses after the activation (step S400). If control device 10 determines that the first time does not elapse (NO in step S400), the processing in step S400 is repeated. At this time, the first time is set to, for example, about 10 minutes.

In contrast, if control device 10 determines that the first time elapses (YES in step S400), control device 10 activates air supply unit 4 (step S500).

Next, control device 10 determines whether or not the temperature of the intake air is higher than the first temperature (step S600). If control device 10 determines that the temperature of the intake air is higher than the first temperature (YES in step S600), control device 10 stops heating unit 9 (step S700). In contrast, if control device 10 determines that the temperature of the intake air is equal to or lower than the first temperature (NO in step S600), control device 10 repeats the determination of the intake air temperature and the first temperature (step S600).

By performing the above-described processing, before air supply unit 4 is activated and the outside air having a low temperature is taken into housing 3 as the intake air, heating unit 9 heats fuel channel 7 in the vicinity of seal member 8 during the predetermined first time. In this manner, it is possible to securely reduce a decrease in temperature of seal member 8 caused by the intake air so as to sufficiently secure the sealability of fuel channel 7, thus achieving power generating system 14 that can supply the fuel to power generator 2 in a sufficient quantity so as to stably generate power.

Moreover, in the case where the possibility of a decrease in temperature in the vicinity of seal member 8 is reduced (specifically, in the case where the temperature of the intake air is higher than the first temperature), heating unit 9 is stopped or its stoppage is kept. Consequently, it is possible to prevent waste consumption of electric power by heating unit 9 so as to save power consumption, thus achieving power generating system 14 excellent in energy efficiency.

### SECOND EXEMPLARY EMBODIMENT

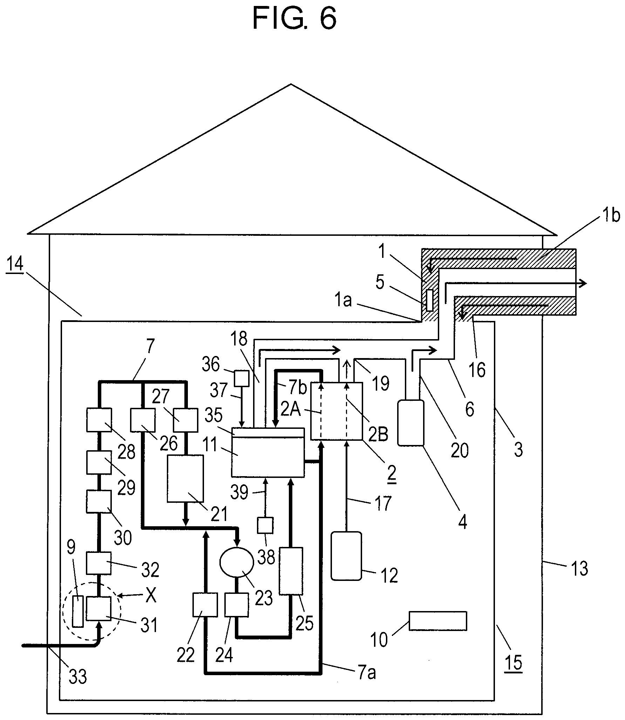

A power generating system in a second exemplary embodiment according to the present invention will be described below with reference to FIG. 6.

FIG. 6 is a schematic view showing the configuration of a power generating system in the second exemplary embodiment according to the present invention.

As shown in FIG. 6, power generating system 14 in the present exemplary embodiment is different from that in the first exemplary embodiment in that power generating system 14 includes fuel cell system. Power generating system 14 in the present exemplary embodiment basically has the same configuration as that of power generating system 14 in the first exemplary embodiment. Thus, the same component parts as those in the first exemplary embodiment are designated by the same reference numerals, and therefore, their explanation will be omitted below.

Specifically, as shown in FIG. 6, like the first exemplary embodiment, power generating system 14 in the present exemplary embodiment includes at least power generating unit 15, control device 10, intake air channel 1, exhaust gas channel 6, and the like. Power generating system 14 is disposed in building 13.

Power generating unit 15 in power generating system 14 is provided with housing 3. Inside of housing 3 are housed at least power generator 2, air supply unit 4, oxidizing agent gas supply unit 12, fuel processor 11, combustor 35, first desulfurizer 21, recycle valve 22, fuel supply unit 23, fuel supply valve 24, second desulfurizer 25, first desulfurizing valve 26, second desulfurizing valve 27, pressure adjuster 28, fuel flowmeter 29, pressure gauge 30, first fuel source valve 31, second fuel source valve 32, and the like. Here, although the present exemplary embodiment exemplifies the configuration in which second desulfurizer 25 is disposed, the present invention is not limited to this. For example, second desulfurizer 25 may not be disposed.

Next, a description will be given below of a configuration of fuel channel 7 extending from fuel intake port 33, through which fuel is taken into power generating unit 15, to power generator 2, unlike power generating unit 15 in the first exemplary embodiment.

First, the fuel supplied to building 13 is supplied to fuel intake port 33 formed at fuel channel 7 in power generating unit 15. On fuel channel 7 are disposed first fuel source valve 31, second fuel source valve 32, pressure gauge 30, fuel flowmeter 29, pressure adjuster 28, second desulfurizing valve 27, first desulfurizer 21, fuel supply unit 23, fuel supply valve 24, second desulfurizer 25, and fuel processor 11 in order from fuel intake port 33 in a fuel flow direction.

At this time, the present exemplary embodiment is designed to adjust whether or not the fuel whose pressure is adjusted by pressure adjuster 28 is allowed to flow in first desulfurizer 21 by opening or closing first desulfurizing valve 26 and second desulfurizing valve 27.

Specifically, only at the time of the activation of power generating system 14, second desulfurizing valve 27 is opened to allow the fuel to flow in first desulfurizer 21, so as to desulfurize the fuel. In contrast, at the time of power generation in power generating system 14, first desulfurizing valve 26 is opened to prevent the fuel from flowing in first desulfurizer 21 but allow the fuel to flow directly in second desulfurizer 25, so as to desulfurize the fuel in second desulfurizer 25 after branching. Incidentally, although the present exemplary embodiment exemplifies the configuration in which two two-way valves, that is, first desulfurizing valve 26 and second desulfurizing valve 27 are used, the present invention is not limited to this. For example, one three-way valve may be disposed at a branch portion between a channel connected to first desulfurizer 21 on fuel channel 7 and a channel that bypasses first desulfurizer 21.

Moreover, fuel channel 7 is branched between fuel processor 11 and power generator 2, and therefore, includes circulation channel 7a, on which gas produced in fuel processor 11 is supplied to fuel supply unit 23 via recycle valve 22. Consequently, in the case where hydrogen is required for reaction at second desulfurizer 25, hydrogen produced in fuel processor 11 is designed to be supplied to second desulfurizer 25 via circulation channel 7a.

Although the present exemplary embodiment exemplifies the configuration in which second desulfurizer 25 is disposed on fuel channel 7, the present invention is not limited to this. For example, second desulfurizer 25 may not be disposed on fuel channel 7. Alternatively, fuel processor 11 is only required to supply the fuel to power generator 2. For example, fuel processor 11 may include equipment configured to supply hydrogen gas, such as a hydrogen producing device, a hydrogen cylinder, or a hydrogen occlusion alloy.

An outlet of fuel channel 7 is connected to an upstream end of off fuel channel 7b. A downstream end of off fuel channel 7b is connected to combustor 35. An outlet of combustor 35 is connected to an upstream end of combustion exhaust gas channel 18. Moreover, a downstream end of combustion exhaust gas channel 18 is connected to exhaust gas channel 6.

Furthermore, an outlet of oxidizing agent gas channel 2B is connected to an upstream end of off oxidizing agent gas channel 19. A downstream end of off oxidizing agent gas channel 19 is connected to exhaust gas channel 6.

In this manner, fuel that is not used in power generator 2 (hereinafter referred to as "off fuel") is discharged from the outlet of fuel channel 7 to exhaust gas channel 6 through fuel gas channel 2A and off fuel channel 7b. In addition, oxidizing agent gas that is not used in power generator 2 (hereinafter referred to as "off oxidizing agent gas") is discharged from the outlet of oxidizing agent gas channel 2B to exhaust gas channel 6 through off oxidizing agent gas channel 19. The off fuel discharged to exhaust gas channel 6 is diluted with the off oxidizing agent gas, and then, is discharged to the outside of building 13 through exhaust gas channel 6.

In addition, produced gas processed in fuel processor 11 and non-used fuel are supplied to combustor 35. Combustion air is supplied from combustion air supply unit 36 to combustor 35 via combustion air supply channel 37. Combustor 35 burns the supplied fuel with air, and then, supplies heat required for fuel processing to fuel processor 11. Moreover, combustor 35 supplies water required for fuel processing from water supply unit 38 to fuel processor 11 through water supply channel 39.

Additionally, power generating system 14 in the present exemplary embodiment includes, at a junction between fuel channel 7 and first fuel source valve 31, seal member 8 for preventing the fuel from leaking from fuel channel 7, like power generating system 14 in the first exemplary embodiment, as described above with reference to FIG. 2.

Specifically, as shown in FIG. 2, heating unit 9 including a heating device for heating fuel channel 7 is disposed in the vicinity of the junction between fuel channel 7 and first fuel source valve 31. Heating unit 9 heats fuel channel 7, thus reducing hardening of seal member 8 disposed on fuel channel 7, caused by a decrease in temperature.

Power generating system 14 in the present exemplary embodiment is such configured as described above, and thus, produces functions and effects similar to those produced by power generating system 14 in the first exemplary embodiment.

Here, the operating method and operation of power generating system 14 in the present exemplary embodiment, in particular, a heating operation in the vicinity of seal member 8 is similar to that in the first exemplary embodiment, described by way of the first to third examples, and therefore, its explanation will be omitted below.

As described above, the power generating system according to the present invention includes: a power generator that generates power using fuel; a housing that houses the power generator therein; an intake air channel that supplies outside air into the housing an exhaust gas channel that discharges exhaust gas from the power generator to an outside; and an air supply unit that supplies the outside air from the intake air channel to the housing. Furthermore, the power generating system includes: an intake air temperature detector that detects the temperature of the intake air into the housing; a fuel channel that is disposed in the housing and allows the fuel to flow; a seal member for preventing fuel from leaking from the fuel channel; a heating unit that performs heating to a temperature equal to or higher than a temperature at which hardening of the seal member is reduced; and a control device that operates the heating unit. The control device may control the operation of the heating unit based on the operation of the air supply unit and the temperature detected by the intake air temperature detector so as to reduce the hardening of the seal member.

With this configuration, the heating unit is controlled based on the operation of the air supply unit and the temperature detected by the intake air temperature detector. In this manner, it is possible to reduce the hardening of the seal member so as to sufficiently secure the sealability of the fuel channel. As a consequence, it is possible to achieve the power generating system that can sufficiently supply the fuel to the power generator so as to stably generate power.

Moreover, the control device in the power generating system according to the present invention may operate the heating unit in the case where the air supply unit is operated and the temperature detected by the intake air temperature detector is equal to or lower than a first temperature.

With this configuration, in the case where the temperature of the intake air detected by the intake air temperature detector is lower than the first temperature, the heating unit heats the seal member before the temperature of the seal member is abruptly decreased. Consequently, it is possible to more securely reduce a decrease in temperature of the seal member so as to sufficiently secure the sealability of the fuel channel. As a consequence, it is possible to achieve the power generating system that can sufficiently supply the fuel to the power generator so as to stably generate power.

Moreover, the control device in the power generating system according to the present invention may not operate the heating unit in the case where the air supply unit is not operated and the temperature detected by the intake air temperature detector exceeds the first temperature.

With this configuration, when the possibility of a decrease in temperature of the seal member is reduced, specifically, in the case where the temperature of the intake air is higher than the predetermined first temperature, the heating unit is not operated but stopped or kept to be stopped. As a consequence, it is possible to save power consumption at the heating unit. Moreover, the control device in the power generating system according to the present invention may stop the air supply unit whereas the control device may operate the heating unit in the case where the air supply unit is operated and the temperature detected by the intake air temperature detector is equal to or lower than a second temperature that is lower than the first temperature.

With this configuration, the air supply unit for taking the air in is stopped before the temperature of the seal member is abruptly decreased with the air having a temperature of the second temperature or lower, and then, the heating unit heats the seal member. As a consequence, it is possible to more securely reduce a decrease in temperature of the seal member so as to sufficiently secure the sealability of the fuel channel. As a consequence, it is possible to achieve the power generating system that can sufficiently supply the fuel to the power generator so as to stably generate power.

Moreover, the control device in the power generating system according to the present invention may operate the heating unit before a predetermined first time at which the air supply unit is operated and in the case where the temperature detected by the intake air temperature detector is equal to or lower than the first temperature.

With this configuration, the heating unit heats the seal member before the temperature of the seal member is abruptly decreased with the air having a temperature of the first temperature or lower. As a consequence, it is possible to more securely reduce a decrease in temperature of the seal member so as to sufficiently secure the sealability of the fuel channel. As a consequence, it is possible to achieve the power generating system that can sufficiently supply the fuel to the power generator so as to stably generate power.

Additionally, in an operating method for a power generating system according to the present invention, the power generating system includes: a power generator that generates power using fuel gas; a housing that houses the power generator therein; an intake air channel that supplies outside air into the housing; an exhaust gas channel that discharges exhaust gas from the power generator to an outside; and an air supply unit that supplies the outside air from the intake air channel to the housing. Furthermore, the power generating system includes: an intake air temperature detector that detects the temperature of intake air into the housing; a fuel channel that is disposed in the housing and allows the fuel to flow; a seal member for preventing fuel from leaking from the fuel channel; a heating unit that performs heating to a temperature equal to or higher than a temperature at which hardening of the seal member is reduced; and a control device that operates the heating unit. The method includes: operating, by the control device, the heating unit in the case where the air supply unit is operated and the temperature detected by the intake air temperature detector is equal to or lower than a first temperature.

With this configuration, it is possible to prevent the sealability of the seal member from being degraded so as to stably operate the power generating system.

### INDUSTRIAL APPLICABILITY

The present invention is useful for the power generating system in which the sealability of the fuel channel in the system is sufficiently secured so as to stably generate electric power in the case where the temperature of the intake air is low.

### REFERENCE MARKS IN THE DRAWINGS

- 1: intake air channel
- 1a: intake air downstream end
- 1b: intake air upstream end
- 2: power generator
- 2A: fuel gas channel
- 2B: oxidizing agent gas channel
- 3: housing
- 4: air supply unit
- 5: intake air temperature detector
- 6: exhaust gas channel
- 7: fuel channel
- 7a: circulation channel
- 7b: off fuel channel
- 8: seal member
- 9: heating unit
- 10: control device
- 11: fuel processor
- 12: oxidizing agent gas supply unit
- 13: building
- 14: power generating system
- 15: power generating unit
- 16: hole
- 17: oxidizing agent gas supply channel
- 18: combustion exhaust gas channel
- 19: off oxidizing agent gas channel
- 20: air channel
- 21: first desulfurizer

- 22: recycle valve
- 23: fuel supply unit
- 24: fuel supply valve
- 25: second desulfurizer
- 26: first desulfurizing valve
- 27: second desulfurizing valve
- 28: pressure adjuster
- 29: fuel flowmeter
- 30: pressure gauge
- 31: first fuel source valve
- 32: second fuel source valve
- 33: fuel intake port
- 34: annular recess
- 35: combustor
- 36: combustion air supply unit
- 37: combustion air supply channel
- 38: water supply unit
- 39: water supply channel

## Claims

1. A power generating system comprising:
a power generator that generates power using fuel gas;
a housing that houses the power generator;
an intake air channel that supplies outside air into the housing;
an exhaust gas channel that discharges exhaust gas from the power generator to an outside;
an air supply unit that supplies the outside air from the intake air channel to the housing
an intake air temperature detector that detects a temperature of the outside air supplied into the housing or intake air into the housing;
a fuel channel that is disposed in the housing and allows the fuel to flow;
a seal member for preventing fuel from leaking from the fuel channel;
a heating unit that performs heating to a temperature equal to or higher than a temperature at which hardening of the seal member is reduced; and
a control device that operates the heating unit,
the control device controlling an operation of the heating unit based on an operation of the air supply unit and a temperature detected by the intake air temperature detector so as to reducet the hardening of the seal member.

2. The power generating system according to claim 1, wherein the control device operates the heating unit in a case where the air supply unit is operated and the temperature detected by the intake air temperature detector is equal to or lower than a first temperature.

3. The power generating system according to claim 1, wherein the control device does not operate the heating unit in a case where the air supply unit is not operated and the temperature detected by the intake air temperature detector exceeds the first temperature.

4. The power generating system according to claim 1, wherein the control device stops the air supply unit whereas the control device operates the heating unit in a case where the air supply unit is operated and the temperature detected by the intake air temperature detector is equal to or lower than a second temperature that is lower than the first temperature.

5. The power generating system according to claim 1, wherein the control device operates the heating unit before a predetermined first time at which the air supply unit is operated and in a case where the temperature detected by the intake air temperature detector is equal to or lower than the first temperature.

6. An operating method for a power generating system, the power generating system comprising:
a power generator that generates power using fuel gas;
a housing that houses the power generator;
an intake air channel that supplies outside air into the housing
an exhaust gas channel that discharges exhaust gas from the power generator to an outside;
an air supply unit that supplies the outside air from the intake air channel to the housing;
an intake air temperature detector that detects a temperature of the outside air supplied into the housing or intake air into the housing;
a fuel channel that is disposed in the housing and allows the fuel to flow;
a seal member for preventing fuel from leaking from the fuel channel;
a heating unit that performs heating to a temperature equal to or higher than a temperature at which hardening of the seal member is reduced; and
a control device that operates the heating unit,
wherein the method comprising:
operating, by the control device, the heating unit in a case where the air supply unit is operated and the temperature detected by the intake air temperature detector is equal to or lower than a first temperature.
